# EUROPÄISCHE PATENTSCHRIFT

(11) **EP 1 674 840 B1**
(45) Veröffentlichungstag und Bekanntmachung des Hinweises auf die Patenterteilung: **04.02.2009**
(21) Anmeldenummer: 04106976.6
(22) Anmeldetag: 23.12.2004
(51) Int. Cl.: G01G 21/28, G01G 21/22

(54) **Abfüllsystem in einer Waage**
Filling system in a balance
Système de remplissage dans une balance

(43) Veröffentlichungstag der Anmeldung: 28.06.2006
(73) Patentinhaber: Mettler-Toledo AG, 8606 Greifensee (CH)
(72) Erfinder: Lüchinger, Paul, 8610 Uster (CH)

(56) Entgegenhaltungen:
- US-A1- 2002 038 567
- US-A1- 2002 040 814
- US-A1- 2002 040 815

## Beschreibung

Die Erfindung betrifft eine Waage mit einem Abfüllsystem sowie die ein solches bildenden Teile, namentlich einen Wägegutträger und eine Entnahmeeinrichtung. Dabei weist die Waage einen Wägeraum mit einem eine Wägezelle enthaltenden, die Rückwand und den Boden des Wägeraums bildenden Waagengehäuse auf, wobei an der Rückwand des Wägeraums ein festes Haltesystem für das Befestigen von Wägeraumzubehör auf verschiedenen Höhen über dem Boden angeordnet ist. Der Wägegutträger ist an einem mit einer Auflage für Kalibriergewichte einer Kalibriervorrichtung versehenen Ausleger der Wägezelle angebracht, wobei der Ausleger eine durch Durchführungen in der Rückwand des Wägeraums reichende Koppelanordnung aufweist, mittels welcher der Wägegutträger abnehmbar angebracht ist.

Es gibt eine Vielzahl von Möglichkeiten der Anwendung einer Waage im Labor. Häufig werden Laborwaagen für das Abfüllen von Substanzen, beispielsweise beim Dosieren pulverfÖrmiger oder flüssiger Substanzen, etc. eingesetzt. Die mit dieser Tätigkeit betraute Person hat in der Regel für die betreffenden Randbedingungen, das heisst die Ausstattung der Waage, die Aufstellung der Waage am Arbeitsplatz, die Anordnung der Entnahmegefässe am Arbeitsplatz, die Grösse und Anzahl der zu befüllenden Gefässe etc. eine weitgehend optimierte Arbeitstechnik entwickelt. Dennoch besteht häufig das Bedürfnis, diese Randbedingungen hinsichtlich einer verbesserten Ergonomie weiter zu entwickeln. Eine Schlüsselstellung nimmt hier die Ausstattung der Waage ein.

Die US 6 557 391 B2 beschreibt eine Waage mit einem Wägeraum, einem eine Wägezelle enthaltenden, die Rückwand und den Boden des Wägeraums bildenden Waagengehäuse, einem Träger zur Aufnahme von Wägegut an einem mit einer Auflage für Kalibriergewichte einer Kalibriervorrichtung versehenen Ausleger der Wägezelle. Der Ausleger weist eine durch Durchführungen in der Rückwand des Wägeraums reichende Koppelanordnung auf, mittels derer der Träger zur Aufnahme von Wägegut am Ausleger abnehmbar angebracht ist. Zwischen der Auflage für die Kalibriergeäichte und dem Wägegutträger erstreckt sich geschlossen der Boden des Wägeraumes. Der Wägegutträger kann als ebenes Gitter ausgebildet sein oder in einer anderen Ausführungsform als Halter für ein oder mehrere Laborgefässe, wobei der Halter auch um eine Achse schwenkbar ausgestaltet sein kann. Auf diese Weise ist eine Vielzahl von Anwendungsmöglichkeiten der Waage gegeben und somit eine verbesserte Handhabung aus ergonomischer Sicht ist gewährleistet.

In der US 6 603 081 B2 wird eine Waage mit einem Wägeraum und einem eine Wägezelle enthaltenden, die Rückwand und den Boden des Wägeraums bildenden Waagengehäuse offenbart, welche einen Träger zur Aufnahme von Wägegut an einem Ausleger der Wägezelle aufweist. An der Rückwand des Wägeraums ist ein festes Haltesystem für das Befestigen von Wägeraum-Zubehör auf verschiedenen Höhen über dem Boden angebracht. Es kann eine Halterung für Laboreinrichtungen oder ein Zwischenboden am Haltesystem befestigt werden, wobei der Zwischenboden für die Ablage von Substanzgefässen, Werkzeugen etc. dienlich sein kann. Das Haltesystem ist so ausgebildet, dass eine Laboreinrichtung oder der Zwischenboden leicht zu befestigen oder zu entfernen ist. Solche Laboreinrichtungen sind beispielsweise Dosiervorrichtungen für pulverförmige oder flüssige Substanzen.

Die beschriebenen Waagen sind nicht in jeder Hinsicht für das Abfüllen von Substanzen, insbesondere, wenn diese nur in kleinen Mengen und daher in kleine Gefässe mit kleinem Öffnungsquerschnitt zu erfolgen haben, optimiert. Im Falle der Verwendung einer allgemein bekannten Waage ist es beispielsweise nicht möglich das für das Verwiegen zu befüllende Gefäss an den für den Abfüllvorgang ergonomisch günstigsten Ort im Wägeraum zu bringen. Ferner erfordert die Entnahme einer abzufüllenden Substanz aus einem Entnahmegefäss, welches sich ausserhalb des Wägeraums befindet eine zeitaufwendige Handhabung, indem häufig mehrfach ein geöffnetes Fenster eines in der Regel vorhandenen Windschutzes passiert werden muss, wobei Luftbewegungen das thermische Gleichgewicht im Wägeraum stören können.

Im Falle einer im oben genannten Stand der Technik beschriebenen Waage, bei der das Entnahmegefäss für die abzufüllende Substanz innerhalb des Wägeraums beispielsweise auf einem Zwischenboden abgestellt sein kann, erfordern die Platzverhältnisse im Wägeraum oft ein besonders vorsichtiges Ausführen der Handbewegungen, damit ein möglicherweise auf einem Zwischenboden abgestelltes Entnahmegefäss nicht umkippt. Ferner besteht die Gefahr, dass sich die Luft im Wägeraum zu stark erwärmt, wenn die ausführende Hand des Benutzers zu lange im Wägeraum verweilt.

Es ist daher Aufgabe der Erfindung, den Träger für die Aufnahme der Wägegüter oder der Wägegutbehältnisse, das heisst einen Wägegutträger ergonomisch zu verbessern. Es ist eine weitere Aufgabe der Erfindung, die Entnahmeeinrichtung für abzufüllende Substanzen ergonomisch zu verbessern. Insbesondere ist es ein durch die Erfindung zu erfüllendes Bedürfnis, eine Waage mit einem Abfüllsystem vorzuschlagen, das dem Benutzer der Waage beim Abfüllen von zu wiegenden Substanzen eine zeitsparende Arbeitstechnik erlaubt.

Diese Aufgabe wird durch einen Wägegutträger sowie ein Abfüllsystem gemäss den unabhängigen Ansprüchen gelöst.

Eine Waage mit einem durch eine Rückwand von einer Wägezelle abgetrennten Wägeraum weist einen Wägegutträger auf. Dieser ist an einem Ausleger der Wägezelle, welcher eine durch Durchführungen in der Rückwand des Wägeraums reichende Koppelanordnung aufweist, abnehmbar angebracht. Die Wägezelle ist in einem Gehäuse untergebracht, welches die Rückwand und den Boden des Wägeraums bildet. Der Wägegutträger weist einen Wägegutaufnahmeaufsatz auf, der im Wägeraum bezüglich der Lage der Koppelanordnung vermittels der Verstelleinrichtung des Wägegutträgers translatorisch verschiebbar und in verschobener Lage positionierbar ist.

Auf diese Weise lässt sich der Wägegutaufnahmeaufsatz nahezu beliebig innerhalb des Wägeraums positionieren, so dass ein Befüllen eines auf ihm platzierten Einwaagegefässes ergonomisch verbessert wird, indem für den Wägegutaufnahmeaufsatz die für die Handhabung günstigste Position ausgewählt werden kann. Beispielsweise kann, wenn ein Entnahmegefäss ausserhalb des Wägeraums platziert ist, der Wägegutaufnahmeaufsatz innerhalb des Wägeraums in die Nähe einer Öffnung des Windschutzes der Waage gebracht werden. Auf diese Weise wird erstens die Strecke zwischen Entnahmegefäss und Einwaagegefäss verkürzt und zweitens wird vermieden, dass die Hand des Benutzers in den Wägeraum gelangt, was zu einem unerwünschten Erwärmen der Luft im Wägeraum führen kann. Insbesondere kann durch die Verstellbarkeit des Wägegutaufnahmeaufsatzes die Befüllung eines auf diesem platzierten Einwaagegefässes von rechts oder von links erfolgen, je nachdem, ob die Waage von einer rechtshändigen oder von einer linkshändigen Person bedient wird. Die Verstellung des Wägegutaufnahmeaufsatzes vermittels der einfach zu bedienenden Verstelleinrichtungen - in bevorzugter Weise handelt es sich dabei um Feststellschrauben - erlaubt ein auf die Aufgabenstellung und die Arbeitsgewohnheiten des Benutzers abstimmbares Positionieren des Wägegutaufnahmeaufsatzes.

In besonderer Weise sind die Ausrichtung und der Ort des Wägegutaufnahmeaufsatzes im Wägeraum bezüglich der Lage der Koppelanordnung vermittels der Verstelleinrichtung des Wägegutträgers durch eine translatorische Verschiebung und eine Rotation einstellbar. Dies erfolgt vorzugsweise dadurch, dass die Höhe des Wägegutaufnahmeaufsatzes über dem Boden des Wägeraums einstellbar ist, und/oder dass der Wägegutaufnahmeaufsatz in einer zur Rückwand orthogonalen Richtung translatorisch verschiebbar und in verschobener Lage positionierbar ist.

Ebenso erlaubt eine weitere Ausgestaltung der Erfindung, dass der Wägegutaufnahmeaufsatz um eine vertikale Achse nahe der Rückwand verschwenkbar ist und/oder um eine zur Rückwand orthogonale Achse rotierbar ist.

Der Wägegutaufnahmeaufsatz weist in bevorzugter Weiterbildung einen Auflagebereich für ein Einwaagegefäss auf, wobei die Ausrichtung des Wägegutaufnahmeaufsatzes durch eine Rotation um eine Achse orthogonal zum Auflagebereich einstellbar und/oder in Richtung orthogonal zum Auflagebereich translatorisch verschiebbar und in verschobener Lage positionierbar ist.

In einer besonders vorteilhaften Ausführungsform weist der Wägegutaufnahmeaufsatz einen Auflagebereich für ein Einwaagegefäss auf und auf der dem Auflagebereich abgewandten Seite einen Dorn. Ein Verbindungselement des Wägegutträgers zum Wägegutaufnahmeaufsatz ist mit einer Durchgangsbohrung versehen, wobei der Dorn in die Bohrung eingreift, wodurch der Wägegutaufnahmeaufsatz relativ zum Verbindungselement um eine entlang dem Dorn verlaufende Achse rotierbar ist und/oder der Wägegutaufnahmeaufsatz relativ zum Verbindungselement entlang dem Dorn translatorisch verschiebbar ist.

In einer weiteren Ausgestaltung weist der Wägegutträger nahe der Rückwand eine vertikal angeordnete Stange auf, die durch ein Verbindungselement zum Wägegutaufnahmeaufsatz hindurch reicht, wobei die Einstellung der Höhe des Wägegutaufnahmeaufsatzes durch eine Verschiebung des Verbindungselements entlang der Stange erfolgt. Auch kann im Wägegutträger das Verbindungselement des Wägegutträgers zum Wägegutaufnahmeaufsatz als ausziehbares Stativ ausgebildet sein, welches Stativ einen Verlängerungsstab und eine Hülse aufweist, wobei der Verlängerungsstab in die Hülse einfahrbar und aus dieser ausfahrbar ist und/oder der Verlängerlungsstab um eine entlang der Hülse verlaufende Achse rotierbar ist

In einer besonders bevorzugten Weiterbildung ist der Wägegutaufnahmeaufsatz in Form eines Gitters mit um 90° abgebogenen Gitterstäben für die Ablage eines Einwaagegafässes oder als eine Aufnahmehülse für die Aufnahme eines aus isolierendem Material bestehenden Einwaagegefässes oder als Rinne zur Aufnahme eines länglichen Einwaagegefässes oder in Form eines Aufnahmekäfigs für die Aufnahme mehrerer kleiner enghalsiger Reakttonsgefässe ausgebildet ist. Die Gitterstäbe des Wägegutaufnahmeaufsatzes sind zumindest teilweise von einem Polymermaterial zum Schutz gegen ein Verrutschen des Einwaagegafässes umgeben.

Eine erfindungsgemässe Waage mit einem Wägeraum, mit einem eine Wägezelle enthaltenden, die Rückwand und den Boden des Wägeraums bildenden Waagengehäuse ist mit einem einen Wägegutaufnahmeaufsatz aufweisenden Wägegutträger versehen, der an einem Ausleger der Wägezelle angebracht ist. Der Ausleger weist eine durch Durchführungen in der Rückwand des Wägeraums reichende Koppelanordnung auf, mittels welcher der Wägegutträger abnehmbar angebracht ist. An der Rückwand des Wägeraums ist ein festes Haltesystem für das Befestigen einer Entnahmeeinrichtung auf verschiedenen Höhen über dem Boden angeordnet, welche einen Entnahmegefässhalter aufweist. Der Wägegutaufnahmeaufsatz ist im Wägeraum bezüglich der Lage der Koppelanordnung vermittels der Verstelleinrichtung des Wägegutträgers translatorisch verschiebbar und in verschobener Lage positionierbar und der Entnahmegefässhalter ist im Wägeraum bezüglich der Lage des Haltesystems vermittels Verstelleinrichtungen der Entnahmeeinrichtung translatorisch verschiebbar und in verschobener Lage positionierbar.

Damit ist ein auf die Bedürfnisse des Benutzers einer Waage und die Erfordernisse eines Abfüllvorgangs abgestimmtes Arbeiten beim Abfüllen von Wägegut in ein auf einem Wägegutträger platziertes Einwaagegefäss möglich.

In besonderer Weise sind die Ausrichtung und der Ort des Wägegutaufnahmeaufsatzes im Wägeraum bezüglich der Lage der Koppelanordnung vermittels der Verstelleinrichtung des Wägegutträgers durch eine translatorische Verschiebung und eine Rotation einstellbar. Dabei sieht eine bevorzugte Weiterbildung der Erfindung vor, dass die Ausrichtung und der Ort des Entnahmegefässhalters im Wägeraum bezüglich der Lage des Haltesystems vermittels Verstelleinrichtungen der Entnahmeeinrichtung durch eine translatorische Verschiebung und eine Rotation einstellbar sind. Auf diese Weise ist höchste Flexibilität beim Abfüllen von Wägegut gewährt.

Die Entnahmeeinrichtung ist in bevorzugter Ausgestaltung mittels einer Einhängvorrichtung abnehmbar am Haltesystem angebracht. Die Entnahmeeinrichtung kann für die Aufnahme von einem oder mehreren, insbesondere zwei Entnahmegefässhaltern ausgebildet sein.

In einer vorteilhaften Ausgestaltung weist die Entnahmeeinrichtung einen U-förmigen oder einen L-förmigen Bügel auf, an welchem der Entnahmegefässhalter abnehmbar befestigt ist. Dabei umfasst der Entnahmegefässhalter einen L-förmigen Haltebogen, wobei im gekrümmten Bereich des Haltebogens parallel zueinander angeordnete Gitterstäbe am Haltebogen angebracht sind. Insbesondere sind die Gitterstäbe zumindest teilweise von einem Polymermaterial zum Schutz gegen ein Verrutschen des Entnahmegefässes umgeben.

In besonders bevorzugter Ausgestaltung ist ein Zwischenboden, der sich aus zwei ebenen, L-förmig miteinander verbundenen Platten aus einem durchsichtigen Material zusammensetzt, am Haltesystem mittels einer weiteren Einhängvorrichtung zusätzlich oder alternativ zur Einhängvorrichtung der Entnahmeeinrichtung anbringbar.

Ausführungsbeispiele der Erfindung werden im Folgenden in den stark schematisierten Zeichnungen dargestellt. Es zeigen:
- Fig. 1: eine Seitenansicht der Waage mit einem erfindungsgemässen Wägegutträger;
- Fig. 2: eine dreidimensionale Darstellung der Sicht in den Wägeraum, mit einem Wägegutträger, wobei an der Rückwand das Haltesystem angebracht ist, mit einer Entnahmeeinrichtung;
- Fig. 3: einen Wägegutträger ohne Wägegutaufnahmeaufsatz, in dreidimensionaler Darstellung;
- Fig. 4: einen Wägegutträger mit Wägegutaufnahmeaufsatz, in dreidimensionaler Darstellung;
- Fig. 5: einen Wägegutaufnahmeaufsatz in Form eines Gitters mit um 90° abgebogenen Gitterstäben in dreidimensionaler Darstellung;
- Fig. 6: einen Wägegutaufnahmeaufsatz in Form einer V-förmigen Rinne zur Aufnahme von länglichen Einwaagegefässen, beispielsweise NMR-Röhrchen;
- Fig. 7: einen Wägegutaufnahmeaufsatz in Form einer Aufnahmehülse für zylindrische Gefässe in dreidimensionaler Darstellung;
- Fig. 8: einen Wägegutaufnahmeaufsatz in Form eines Aufnahmekäfigs für mehrere zylindrische oder konische Gefässe in dreidimensionaler Darstellung;
- Fig. 9a: einen Wägegutaufnahmeaufsatz in Form eines Aufnahmekäfigs mit mehreren kleinen Reaktionsgefässen mit Deckel in dreidimensionaler Darstellung;
- Fig. 9b: einen Wägegutaufnahmeaufsatz in Form eines Aufnahmekäfigs mit mehreren kleinen Reaktionsgefässen mit Deckel in einer Sicht von der Seite der Einfüllöffnungen;
- Fig. 10: eine Entnahmeeinrichtung ohne Entnahmegefäss in dreidimensionaler Darstellung;
- Fig. 11: eine weitere Ausführungsform der Entnahmeeinrichtung mit zwei Entnähmegefässhaltem ohne Entnahmegefässe in dreidimensionaler Darstellung;
- Fig. 12a: die Entnahmeeinrichtung aus Figur 10 in leicht veränderter Ausführung mit einem Entnahmegefäss in dreidimensionaler Darstellung;
- Fig. 12b: die Entnahmeeinrichtung aus Figur 12a mit Entnahmegefäss in der Seitenansicht;
- Fig. 12c: die Entnahmeeinrichtung aus Figur 12a mit Entnahmegefäss in der um 90° gegenüber der Ansicht aus Figur 12b gedrehter Seitenansicht.
- Figur 13: eine Entnahmeeinrichtung in einer weiteren Ausführungsform in der Ansicht gemäss jener der Figur 12c;
- Fig. 14: eine dreidimensionaler Darstellung der Sicht in den Wägeraum, mit einem Wägegutträger, wobei lediglich der Boden und die auf diesem angeordnete Auffangschale und die Rückwand als den Wägeraum begrenzende Elemente zu sehen sind und wobei am Haltesystem ein Zwischenboden angebracht ist.

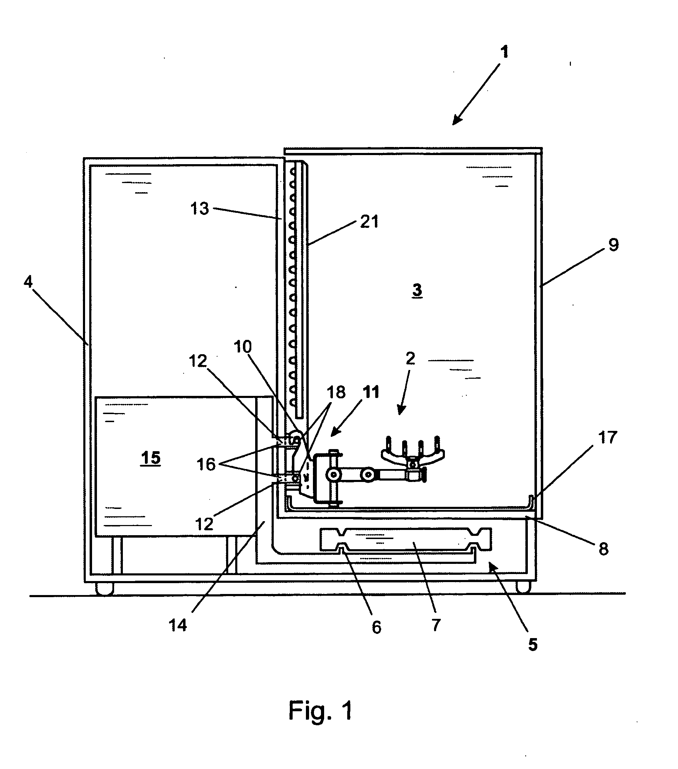

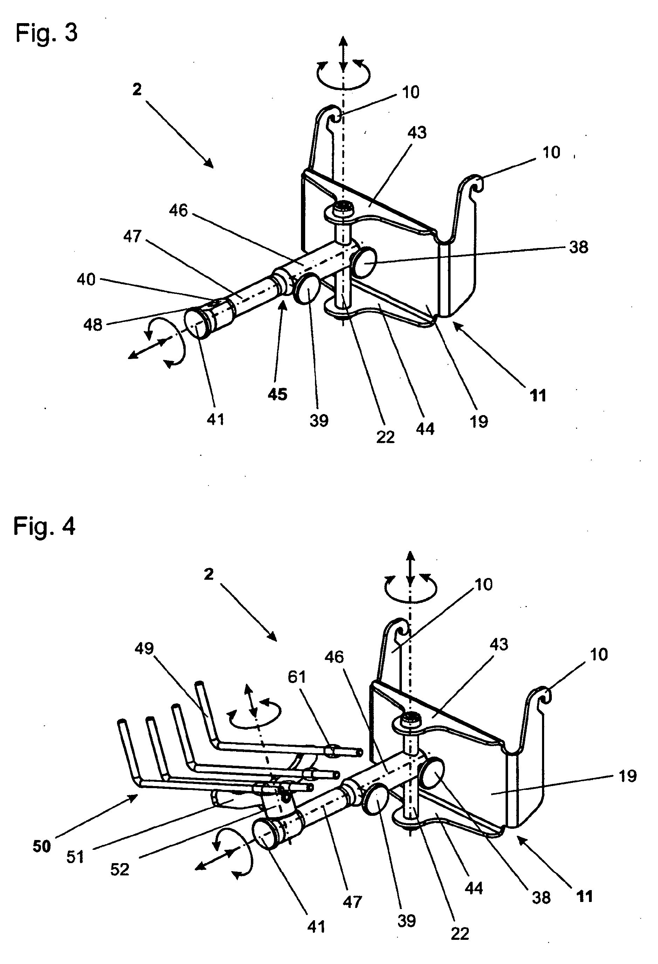

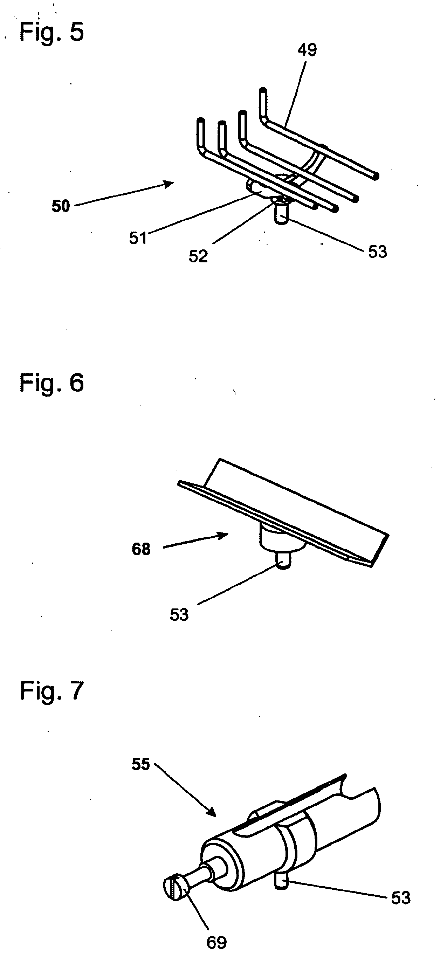

Die Figur 1 zeigt eine Seitenansicht der Waage 1 mit dem Waagengehäuse 4 und dem den Wägeraum 3 umgebenden Windschutz 9. Im Waagengehäuse 4 befindet sich die nicht näher dargestellte Wägezelle 15. Mit der Wägezelle 15 ist zur Krafteinleitung ein L-förmiger Ausleger 14 mit der Kalibriervorrichtung 5 verbunden, wobei im unteren Bereich des Auslegers 14 eine Auflage 6 für mindestens ein Kalibriergewicht 7 vorgesehen ist. Die Kalibriervorrichtung 5 befindet sich in einem oben durch den Boden 8 des Wägeraumes 3 abgeschlossen Teil des Waagengehäuses 4. Am vertikal verlaufenden Schenkel des L-förmigen Auslegers 14 sind in Richtung Wägeraum 3 Fortsätze 16 angebracht, die durch die Durchführungen 12 der Rückwand 13 des Wägeraumes 3 ragen. Diese Fortsätze 16 bilden mit den seitlich herausragenden Haltebolzen 18 eine Anordnung für die Ankopplung des Wägegutträgers 2 vermittels eines Koppelelements 11. Der Wägegutträger 2 dient der Aufnahme verschiedenster Aufsätze zu unterschiedlichen Wäge-Anwendungen, beispielsweise für Wägegutbehälter oder für Wägegüter selbst. In diesem Beispiel ist der Wägegutträger 2 als Gitter mit abgebogenen Gitterstäben ausgebildet, wie weiter unten anhand der Figuren 4 und 5 näher erläutert wird.

Mit dem Bezugszeichen 17 ist in der Figur 1 eine Auffangschale gekennzeichnet, die dazu dient, vom Wägegutträger 2 herab gefallenes Wägegut aufzufangen. Die Auffangschale 17 kann herausnehmbar ausgestaltet sein, wodurch eine leichte Reinigung des Wägeraums 3 gewährleistet ist.

An der Rückwand 13, oberhalb der seitlichen Einhängungen des Koppelelements 11 des Wägegutträgers 2 über die an den sich nahe der Wand befindlichen Haltebolzen 18 ist im Inneren des Wägeraumes 3 ein Haltesystem 21 vorgesehen. Dieses Haltesystem 21 bietet eine Vielzahl von Erleichterungen und Anwendungen für den Wägebetrieb. Insbesondere erlaubt dieses an der Rückwand 13 angeordnete Haltesystem 21 das Befestigen von Wägeraum-Zubehör auf verschiedenen Höhen über dem Boden 8. Damit wird ein Experimentieren und Abfüllen von Substanzen innerhalb des Wägeraums 3 möglich.

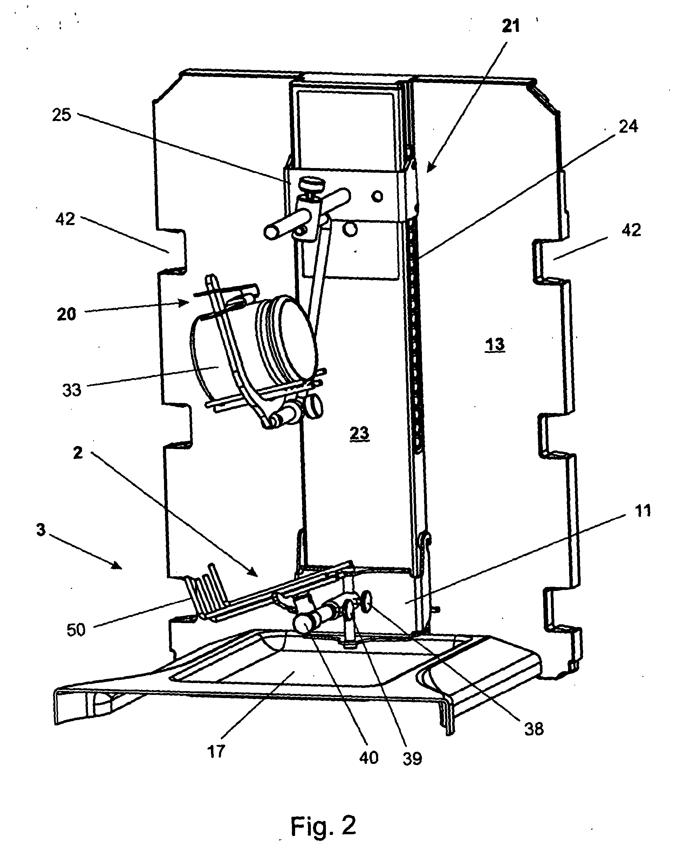

Die Figur 2 zeigt in dreidimensionaler Darstellung eine Sicht in den Wägeraum 3 und die darin befindlichen Elemente eines Abfüllsystems sowie eine mögliche Anordnung desselben im Wägeraum 3. Von den den Wägeraum 3 begrenzenden Wänden sind lediglich eine in den Boden 8 (siehe Figur 1) integrierte Auffangschale 17 und die Rückwand 13 zu sehen. An der Rückwand 13 ist das Haltesystem 21 angebracht. Dieses ist als säulenartiger Vorsprung 23 der Rückwand 13 ausgebildet. Beidseitig des Vorsprungs 23 ist jeweils eine vertikal verlaufende Nut 24 vorgesehen. Im unteren Bereich des säulenartigen Vorsprungs 23 in der Flucht der Nuten 24 ist die Koppelanordnung des Wägegutträgers 2, welche die in Figur 1 gezeigten Fortsätze 16 mit den seitlich herausragenden Haltebolzen 18 umfasst, angeordnet. Jede Nut 24 weist auf einer Seite regelmässig angeordnete, halbkreisförmige Aussparungen auf, in welche Zapfen der Einhängevorrichtung 25 der Entnahmeeinrichtung 20 formschlüssig eingreifen. In der hier gezeigten Darstellung ist ein Entnahmegefäss 33 für abzufüllendes Wägegut in der Entnahmeeinrichtung 20 liegend platziert. Ein Haltesystem 21 sowie eine Vorrichtung zum Anbringen von Wägreaumzubehör an demselben ist in der US 6 603 081 B2 detailliert beschrieben und soll hier nicht weiter ausgeführt werden.

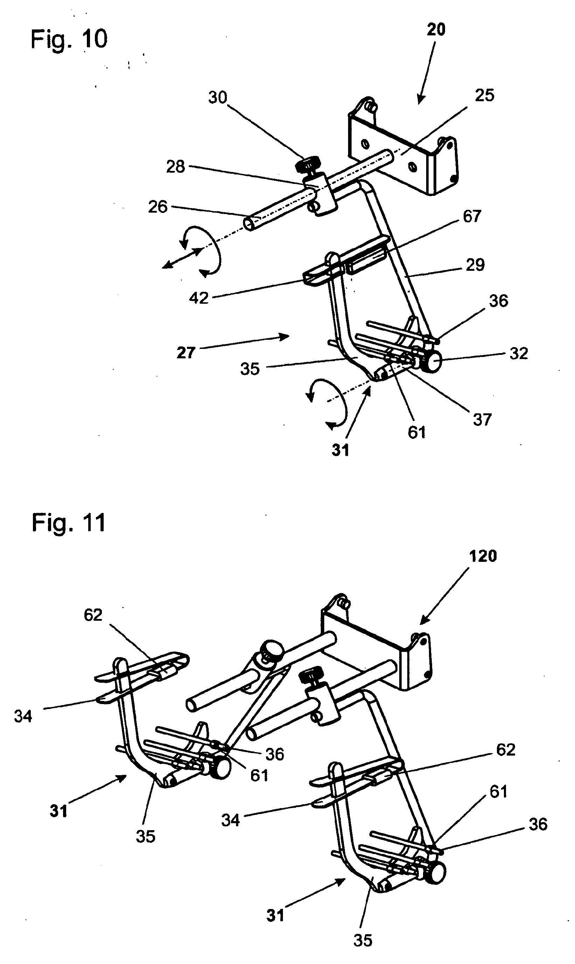

Die Einhängvorrichtung 25 ist derart ausgestaltet, dass sie als Bestandteil der Entnahmeeinrichtung 20 diese am Haltesystem 21 abnehmbar ankoppelt. Die Entnahmeeinrichtung wird weiter unten anhand der Figuren 10 bis 13 im Detail erläutert.

In der Figur 2 ist im unteren Bereich des Wägeraums 3 ein Wägegutträger 2 dargestellt. Dieser ist vermittels einer Koppelanordnung abnehmbar mit einem hier nicht sichtbaren Ausleger der Wägezelle 15 verbunden. Der Wägegutträger 2 weist eine Verstelleinrichtung mit verschiedenen Verstellelementen zur Positionierung des hier als Gitter 50, mit um 90° abgebogenen Gitterstäben 49 ausgebildeten Wägegutaufnahmeaufsatzes auf. Die detaillierte Beschreibung dieses Wägegutträgers 2 erfolgt weiter unten anhand der Figuren 3 und 4.

Die Rückwand 13 weist seitlich jeweils drei Aussparungen 42 auf, welche mit auswechselbaren Clips (hier nicht sichtbar) zum Verschliessen versehen sein können. Beispielsweise können ein oder mehrere Clips aus einer oder mehreren Aussparungen 42 entfernt werden, um irgendwelche Versorgungen, beispielsweise elektrische Zuleitungen und/oder Schläuche für zu wägende Flüssigkeitszugaben, durch den geschlossenen Windschutz in den Wägeraum hineinzuführen. Diese Aussparungen und Clips sind Gegenstand einer in der US 6 686 545 B2 beschriebenen Erfindung, welche an dieser Stelle nicht weiter ausgeführt werden soll.

Die Figur 3 zeigt in perspektivischer Darstellung einen Wägegutträger 2 ohne einen Wägegutaufnahmeaufsatz. Die Einhängungen 10 sind als hakenförmige Ausleger beidseitig des Koppelelements 11 ausgebildet und über einen etwa rechteckförmigen Verbindungsbereich 19 miteinander verbunden. Mittig des Verbindungsbereichs 19 ist eine Stange 22 zwischen einer oberen und einer unteren Befestigungslasche 43, 44 eingespannt, wobei die Stange 22 in der für den Betrieb aufgestellten Waage vertikal ausgerichtet ist. Die Stange 22 reicht mit etwas Spiel durch eine Bohrung der Hülse 46 eines entlang seiner Achse ausfahrbaren Stativs 45. Dabei verläuft die Bohrung orthogonal zur Längsachse der Hülse 46. Das Stativ 45 ist somit entlang der Stange 22 auf und ab bewegbar und gleichzeitig um die Stange 22 verschwenkbar. Der Fixierung einer Position des Stativs dient eine erste Feststellschraube 38, die orthogonal zur Stange 22 von der Mantelfläche der Hülse 46 in diese eindringt und die Stange 22 darin fixiert. Dadurch ist die Position des Wägegutaufnahmeaufsatzes im Wägeraum 3 vermittels einer Translationsbewegung höhenverstellbar und vermittels einer Rotationsbewegung um die durch die Längsachse der Stange 22 verlaufende Achse verstellbar.

Das Stativ weist einen Verlängerungsstab 47 auf, der in die Hülse 46 einfahrbar und aus dieser ausfahrbar ist, wobei an dessen der Stange 22 gegenüber liegendem Ende der Wägegutaufnahmeaufsatz befestigbar ist. Der Fixierung des Verlängerungsstabs 47 in der Hülse 46 dient eine zweite Feststellschraube 39, welche parallel zur ersten Feststellschraube 38 angeordnet ist. Dadurch ist die Position des Wägegutaufnahmeaufsatzes im Wägeraum 3 vermittels einer translatorischen Verschiebung in einer Richtung orthogonal zur Rückwand 13 einstellbar. Wenn nun gleichzeitig eine Rotationsbewegung um die durch die Längsachse der Stange 22 verlaufende Achse möglich ist, so kann der Wägegutträger in einer horizontal verlaufenden Ebene positioniert werden. Ferner ist die Position des Wägegutaufnahmeaufsatzes im Wägeraum 3 vermittels einer Rotationsbewegung um die durch die Längsachse des Stativs 45 gekennzeichnete Achse verstellbar.

Das Stativ 45 stellt ein Verbindungselement zwischen der Stange 22 und dem Wägegutäufnahmeaufsatz dar. Der Bereich 40 des Verlängerungsstabs 47 des Stativs 45, an welchem der Wägegutaufnahmeaufsatz befestigbar ist, ist gegenüber dem restlichen Verlängerungsstab 47 verbreitert und auf einer Seite seiner Mantelfläche abgeflacht. Mittig dieses abgeflachten Bereichs 40 ist eine Durchgangsbohrung 48 durch den Verlängerungsstab 47 vorhanden, in welchen der Wägegutaufnahmeaufsatz mit einem Dorn eingreifen kann. Der Dorn ist mittels einer dritten Feststellschraube 41 fixierbar.

Die Figur 4 gibt in einer zu Figur 3 analogen Darstellung sämtliche dort gezeigten Elemente des Wägegutträgers 2 wieder, wobei der Wägegutaufnahmeaufsatz in Form eines Gitters 50 mit um 90° abgebogenen und parallel zueinander verlaufenden Gitterstäben 49 dargestellt ist. Dadurch bilden die Gitterstäbe 49 einen Auflagebereich für ein vorzugsweise zylinderförmiges Einwaagegefäss, wobei dieses bevorzugt mit seiner Mantelfläche auf dem Gitter 50 aufliegt. Um ein Verrutschen des Einwaagegefässes zu vermeiden, sind die einzelnen Gitterstäbe 49 mit einem Ring 61 oder einer Hülse aus Kunststoff umfasst. Als entsprechende Massnahme können die Gitterstäbe 49 jedoch auch, zumindest teilweise, mit vorzugsweise elektrisch leitendem Polymermaterial beschichtet sein. Auf der dem Auflagebereich abgewandten Seite des Gitters 50 sind die Gitterstäbe 49 an einer bogenförmigen Basis 51 befestigt. Die bogenförmigen Basis 51 grenzt an einen zylinderförmigen Halter 52 an, an dessen der der bogenförmigen Basis 51 gegenüber liegenden Grundfläche ein Dorn 53 mittig hervor steht, wie in der Figur 5, die eine dreidimensionale Darstellung das Gitter 50 zeigt, zu sehen ist. Die Gitterstäbe 49 sind etwa orthogonal zum Dorn 53 an der bogenförmigen Basis 51 befestigt. Im gelösten Zustand der dritten Feststellschraube 41 kann nun der Wägegutaufnahmeaufsatz, hier das Gitter 50, mit dem Dorn 53 in der Durchgangsbohrung 48 rotiert werden. Der Wägegutaufnahmeaufsatz kann auch entlang dem Dorn 53 relativ zum abgeflachten Bereich 40 am Verlängerungsstab 47 des Stativs 45 translatorisch verschoben werden.

Der Wägegutaufnahmeaufsatz - hier das Gitter 50 - kann nun vermittels Lösen der zweiten Feststellschraube 39 mitsamt dem Verlängerungsstab 47 um dessen Achse verdreht werden, so dass der Auflagebereich der Gitterstäbe 49 leicht gegen die Horizontale geneigt ist. Das heisst, das um 90° abgebogene Ende der Gittestäbe 49 liegt tiefer, als deren gerades Ende. Auf diese Weise lässt sich ein Einwaagegefäss, ohne dass es aus dem Wägegutaufnahmeaufsatz kippen kann, dort platzieren.

Je nachdem, ob der Abfüllvorgang in ein Einwaagegefäss mit der linken oder rechten Hand ausgeführt wird, kann der Wägegutaufnahmeaufsatz mit dem hier nicht sichtbaren Einwaagegefäss um den Dorn 53 als Achse in die entsprechende Position gedreht werden, so dass die Öffnung des Einwaagegefässes aus einer beliebeigen Position einfach erreicht werden kann.

Durch Rotation um die entlang der Stange 22 verlaufende Achse lässt sich der Wägegutaufnahmeaufsatz an eine nahezu beliebige Stelle im unteren Bereich des Wägeraums 3 bringen, insbesondere, wenn von der Ausziehbarkeit des Verlängerungsstabs 47 des Stativs 45 und von der Höhenverstellbarkeit entlang der Stange 22 Gebrauch gemacht wird.

Figur 6 zeigt in dreidimensionaler Darstellung eine weitere Ausführungsform eines Wägegutaufnahmeaufsatzes - hier in Gestalt einer V-förmigen Auflagerinne 68 für längliche Einwaagegefässe, insbesondere NMR-Röhrchen. Die Auflagerinne 68 kann auch ein U-förmiges Profil besitzen.

Figur 7 zeigt in dreidimensionaler Darstellung eine weitere Ausführungsform eines Wägegutaufnahmeaufsatzes - hier in Gestalt einer Aufnahmehülse 55, die der Aufnahme eines aus isolierendem Material, vorzugsweise aus Kunststoff, bestehenden Einwaagegefässes dient. Die Aufnahmehülse 55 aus Metall, vorzugsweise Aluminium, ist über den Dorn 53 mit dem gesamten ebenfalls aus Metall bestehenden Wägegutträger 2 geerdet. Somit können sich die Einwaagefässe nicht elektrostatisch aufladen, was das Wägeresultat verfälschen würde. An ihrer der Öffnung abgewandten Seite ist in die Aufnahmehülse 55 eine Schraube 69 eindrehbar, so dass der Aufnahmebereich im Inneren der Aufnahmehülse 55 für Einwaagegefässe unterschiedlicher Länge angepasst werden kann, wodurch die Öffnung eines Einwaagegefässes stets mit der Öffnung der Aufnahmehülse 55 abschliesst. Folglich kann sich kein eventuell verschüttetes Wägegut in der Aufnahmehülse 55 ansammeln.

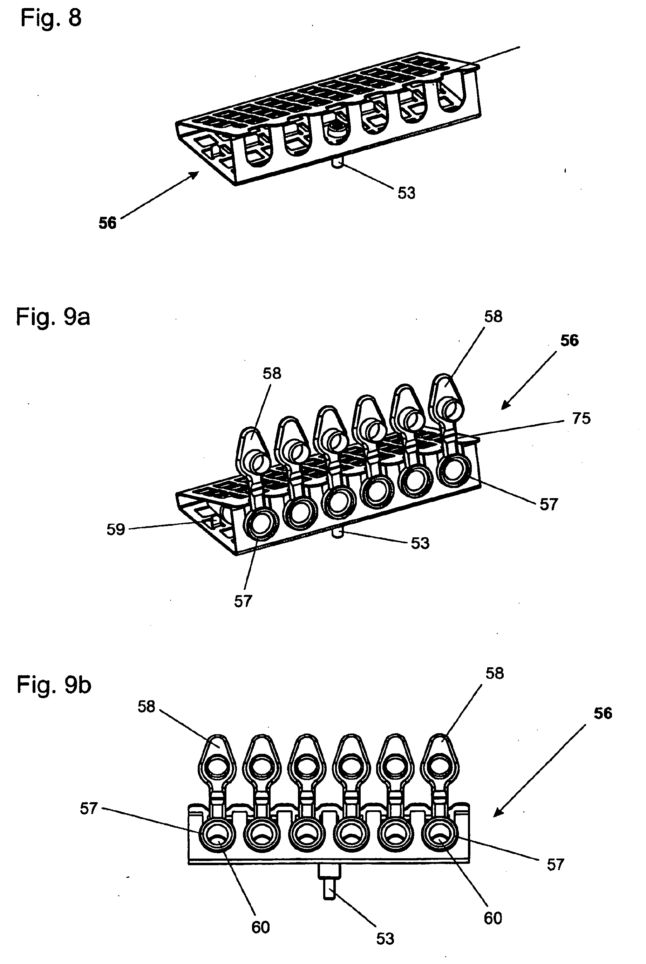

Die Figur 8 zeigt in perspektivischer Darstellung einen Wägegutaufnahmeaufsatz in Form eines Aufnahmekäfigs 56 für mehrere kleine enghalsige Einwaagegefässe. Dabei kann es sich beispielsweise um Zentrifugengefässe oder kleine Reaktionsgefässe handeln, welche z.B. zuerst mit einer pulverförmigen Substanz befüllt werden können und anschliessend für einen Lösungsprozess mit einer Mehrkanalpipette Lösungsmittel hinzugefügt werden kann. Durch den aus perforiertem Metallblech hergestellten Aufnahmekäfig 56 wird die elektrostatische Aufladung der vorzugsweise aus Kunststoff gefertigten kleinen Reaktionsgefässe 57 vermieden.

In der Figur 9a ist der Wägegutaufnahmeaufsatz in Form des Aufnahmekäfigs 56 aus Figur 8 in derselben Ansicht mit mehreren kleinen Reaktionsgefässen 57 gezeigt. Diese haben eine zylindrische und zum Gefässboden hin konische Form und weisen einen Deckel 58 auf. Die Lasche 59 dient der Positionierung der kleinen Reaktionsgefässe 57. Die Kerben 75 dienen der Aufnahme der Deckel 58.

Die Figur 9b zeigt den Wägegutaufnahmeaufsatz in Form eines Aufnahmekäfigs 56 mit mehreren zylindrischen oder konischen kleinen Reaktionsgefässen 57 mit Deckel 58 aus Figur 8a in einer Sicht von der Seite der EinfollöMungen 60. Wie bereits anhand der Figuren 4 und 5 beschrieben kann auch der Aufnahmeaufsatz 56 in gegenüber der Horizontalen geneigter Lage positioniert werden.

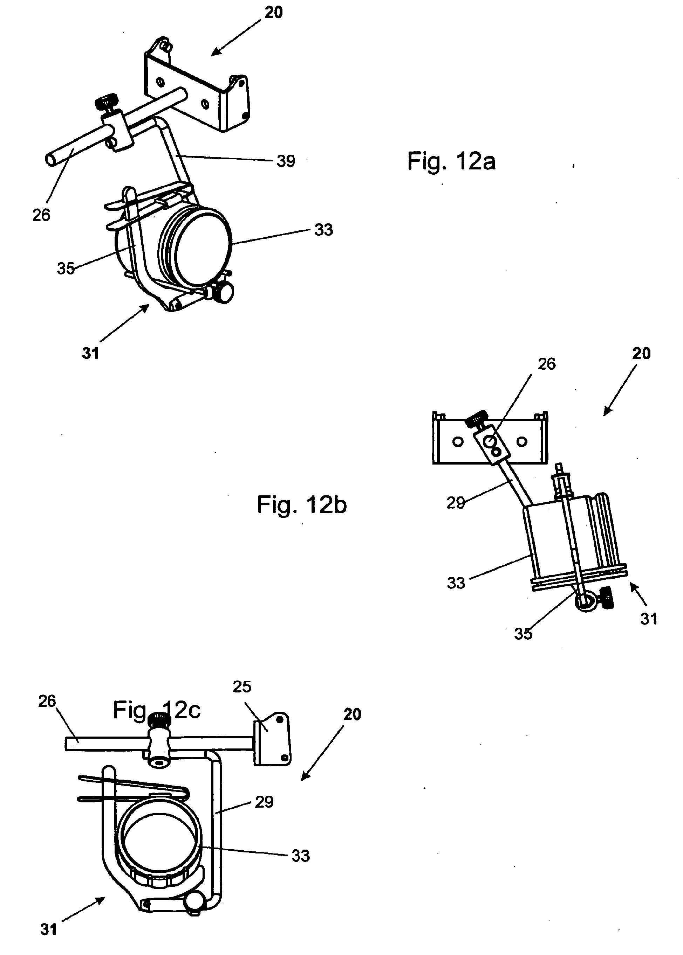

In der Figur 10 ist die Entnahmeeinrichtung 20 für das abzufüllende Wägegut in perspektivischer Darstellung - ohne Entnahmegefäss 33 - gezeigt. Wie der Figur 2 zu entnehmen ist, ist die gesamte Entnahmeeinrichtung 20 vermittels der Einhängvorrichtung 25 entlang dem Haltesystem in vertikaler Richtung verschiebbar. Die Einhängvorrichtung 25 weist einen senkrecht zur Rückwand 13 in den Wägeraum 3 hineinragenden Stab 26 auf, an dem eine Haltevorrichtung 27 mittels eines Befestigungselements 28 angebracht werden kann. Das gezeigte Befestigungselement 28 hat eine zylindrische Form mit einer senkrecht zur Zylinderlängsachse verlaufenden Bohrung, wobei der Stab 26 im montierten Zustand durch diese hindurch greift. Eine vierte Feststellschraube 30, die von einer Zylindergrundfläche des Befestigungselements 28 in dieses eingedreht werden kann, dient dem Festklemmen der Haltevorrichtung 27 für ein Entnahmegefäss. Durch Lösen dieser vierten Feststellschraube 30 kann die Haltevorrichtung 27 um die Längsachse des Stabes 26 verschwenkt werden. Die Haltevorrichtung 27 ist nach Lösen der Feststellschraube 30 auch entlang des Stabs 26 verschiebbar, womit die Position der Entnahmeeinrichtung 20 sowohl durch eine translatorische Verschiebung als auch eine Rotation in Bezug auf das Haltersystem einstellbar ist. Damit kann ein in der Haltevorrichtung 27 platziertes Entnahmegefäss 33 (siehe Figuren 12a - 12c) an einen für den Abfüllvorgang günstigen Ort im Wägeraum 3 gebracht werden und in einer entsprechend günstigen Ausrichtung der Öffnung des Entnahmegefässes 33 positioniert werden. Dies schliesst auch die Möglichkeit des wahlweisen Arbeitens mit der rechten Hand oder der linken Hand mit ein.

Die Haltevorrichtung 27 umfasst einen U-förmigen Bügel 29 und einen Entnahmegefässhalter 31, wobei der Entnahmegefässhalter 31 am Bügel 29 abnehmbar befestigt ist. Die Befestigung erfolgt vermittels eines am Entnahmegefässhalter 31 angeschraubten Zylinders 37 mit einer Sackbohrung, in welche der Bügel 29 mit einem U-Schenkel eingreifen kann. Zur Fixierung reicht eine fünfte Feststellschraube 32 von der Zylindermantelseite in die Sackbohrung hinein. Im gelösten Zustand der fünften Feststellschraube 32 kann der Entnahmegefässhalter 31 um die Längsachse des U-Schenkels des Bügels 29 verschwenkt werden, wodurch die Position des Entnahmegefässhalters 31 durch eine Rotationsbewegung um eine weitere Achse - im Wesentliches parallel zur ersten Achse - verstellbar ist. Ferner ist der Entnahmegefässhalter 31 entlang dem U-Schenkel des Bügels 29 verschiebbar,

Für die Lagerung eines Entnahmegefässes 33 (siehe Figur 2) weist der Entnahmegefässhalter 31 einen L-förmigen Haltebogen 35 auf, wobei im gekrümmten Bereich des Haltebogens 35 vier parallel zueinander angeordnete Gitterstäbe 36 in ihrer Mitte am Haltebogen 35 angeschweisst sind, und dadurch eine Auflage für das Entnahmegefäss 33 bilden. Um ein Verrutschen des Entnahmegefässes 33 zu vermeiden, sind die einzelnen Gitterstäbe 36 mit einem Ring 61 oder einer Hülse aus Kunststoff umfasst. Als entsprechende Massnahme können die Gitterstäbe jedoch auch, zumindest teilweise, mit vorzugsweise elektrisch leitfähigem Polymermaterial beschichtet sein. Zur Fixierung des Entnahmegefässs 33 im Entnahmegefässhalter 31 ist ein Klemmelement 42 vorhanden, welches eine rechteckförmige Öffnung aufweist, durch die der L-förmige Haltebogen 35 mit etwas Spiel hindurch greift. Da letzterer einen rechteckförmigen Querschnitt besitzt, verkantet sich das Klemmelement 42 bei geringfügiger Schrägstellung und behält seine Position im fixierten Zustand des Entnahmegefässes 33 bei. Um eine Beschädigung des Entnahmegefässes 33 zu vermeiden, ist das Klemmelement 42 an seiner Berührungsstelle mit dem Entnahmegefäss 33 mit einer Kunststoffverkleidung 46 versehen.

In der Figur 11 ist eine weitere Ausführungsform der Entnahmeeinrichtung 120 für das abzufüllende Wägegut gezeigt. Diese unterscheidet sich von der in Figur 10 gezeigten darin, dass hier zwei Stäbe 26 mit jeweils einer Haltevorrichtung 27 angebracht sind. Auf diese Weise können beim Abfüllen von Substanz in ein Einwaagegefäss aus zwei Entnahmegefässen 33 verschiedene Substanzen, beispielsweise bei einem Mischvorgang, entnommen werden. Damit können die in der jeweiligen Haltevorrichtung 27 platzierten Entnahmegefässe 33 jedes für sich an einen für den Abfüllvorgang günstigen Ort im Wägeraum 3 gebracht werden und in einer entsprechend günstigen Ausrichtung ihrer jeweiligen Öffnungen positioniert werden. Selbstverständlich können auch zwei Haltevorrichtungen 27 mit jeweils einem Entnahmegefäss 33 an einem möglicherweise verlängerten Stab 26, wie er in der Figur 10 gezeigt ist, angebracht werden.

Das jeweilige Entnahmegefäss 33 wird im gezeigten Beispiel im jeweiligen Entnahmegefässhalter 31 mittels einer Klemmfeder 34 gehalten. Diese ist aus einem Federblech gefertigt, welches in der Form eines abgerundeten V gebogen ist, und weist zwei Öffnungen auf, durch welche der lange Schenkel des L-förmigen Haltebogens 35 mit etwas Spiel hindurch greift. Im entspannten Zustand der Klemmfeder 34 ist diese wiederum durch Verkanten in ihrer Position am L-förmigen Haltebogen 35 fixiert und kann durch Zusammendrücken entlang dem L-förmigen Haltebogen 35 bewegt werden. Um eine Beschädigung und ein Verrutschen des Entnahmegefässes 33 zu vermeiden trägt die Klemmfeder 34 an ihrer Berührungsstelle mit dem Entnahmegefäss 33 noch eine weiche Hülse 62, beispielsweise aus Gummi oder Plastik. Im gekrümmten Bereich des L-förmigen Haltebogens 35 sind vier parallel zueinander angeordnete Gitterstäbe 37 in ihrer Mitte am L-förmigen Haltebogen 35 angeschweisst und bilden eine Auflage für das Entnahmegefäss 33.

Die Figur 12a zeigt die Entnahmeeinrichtung 20 für das abzufüllende Wägegut In perspektivischer Darstellung, wie die Figuren 10 und 11, jedoch mit einem mit seiner Mantelfläche auf den Gitterstäben liegend positionierten Entnahmegefäss 33. Letzteres kann nun je nach dem Grad seiner Befüllung gegenüber der durch die Längsachse des Stabes 26 definierten Achse rotiert und damit gegenüber der Horizontalen geneigt werden. Im Verlauf des Abfüllens kann nun das Entnahmegefäss 33 mit abnehmendem Befüllungsgrad durch Verstellen des Entnahmegefässhalters 31 vermittels dessen Befestigung am unteren Schenkel des U-förmigen Bügels 29 mehr und mehr in Richtung der Horizontalen geneigt werden, um den Zugang zum Abfüllgut zu erleichtern. Eine weitere Erleichterung für die Entnahme von Abfüllgut aus dem Entnahmegefäss 33 bietet die Möglichkeit, mittels der Befestigung des oberen Schenkels des U-förmigen Bügels 29 am Stab 26, den U-förmigen Bügel 29 mitsamt dem Entnahmegefässhalters 31 durch Rotation um die Langsachse des Stabs 26 beispielsweise in die Nähe einer seitlichen Öffnung des Wägeraums zu verschwenken (siehe Figur 12b), die der Bedienperson erlaubt, lediglich mit einem hier nicht sichtbaren Entnahmewerkzeug, beispielsweise einem Spatel in den Wägeraum 3 zu greifen, ohne dass die Hand in den selbigen gelangt, was möglicherweise unerwünschte Temperaturveränderungen durch die Handwärme verursachen könnte.

Wie aus der Figur 12c, welche die Entnahmeeinrichtung 20 für das abzufüllende Wägegut in der Seitenansicht auf die Öffnung des Entnahmegefässes 33 zeigt, ersichtlich ist, kann letzteres mit dem Entnahmegefässhalter 31 entlang der Achse des Stabs 26 vermittels einer translatiorischen Verschiebung verstellt werden und - wenn auch in geringerem Masse - auch entlang der beiden Schenkel des U-förmigen Bügels 29. Damit ist der Entnahmegefässhalter 31 und mit diesem das Entnahmegefäss 33 in einem weiten Bereich innerhalb des Wägeraums 3 positionierbar. Insbesondere ist die Einhängevorrichtung 25 entlang dem Haltesystem soweit in Richtung des Wägegutträgers 2 verschiebbar, so dass der Abfüllvorgang auf ein Minimum an Weg zwischen einem Entnahmegefäss 33 und einem Einwaagegefäss reduziert werden kann, was der Gefahr einer möglichen Verschmutzung des Wägeraums 3 durch möglicherweise verschüttetes Wäge- oder Abfüllgut entgegen wirkt.

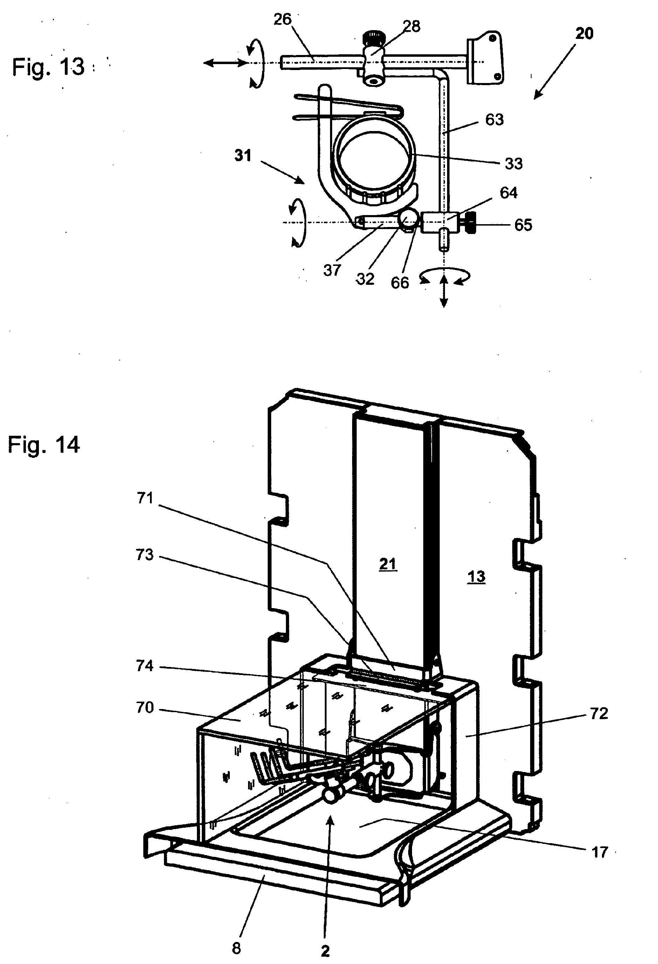

In der Figur 13 ist in zu Figur 12c analoger Darstellung eine weitere Ausführungsform der Entnahmeeinrichtung 20 gezeigt. Teile, die mit jenen in den Figuren 10 bis 12c übereinstimmen, sind mit denselben Bezugszeichen versehen und hier nicht noch einmal beschrieben. Abweichend von den vorgängig dargestellten Ausführungsformen weist die Entnahmeeinrichtung 20 keinen u-förmigen Bügel 29, sondern einen L-förmigen Bügel 63 auf. Dieser ist an seinem kurzen L-Schenkel mit dem Befestigungselement 28 verbunden. Am Ende des langen L-Schenkels ist ein weiteres zylinderförmiges Befestigungselement 64 vorhanden. Der lange L-Schenkel reicht durch eine Bohrung von der Mantelfläche durch das weitere zylinderförmige Befestigungselement 64 hindurch, wobei dieses von der Zylindergrundfläche her mittels einer sechsten Feststellschraube 65 am L-förmigen Bügel 63 festgeklemmt wird. Durch Lösen dieser sechsten Feststellschraube kann nun der Entnahmegefässhalter 31 entlang des langen L-Schenkels in einer translatorischen Verschiebung verstellt werden oder um eine entlang dem langen L-Schenkel verlaufende Achse verdreht werden. Somit ist neben einer translatorischen Verschiebung des Entnahmegefässhalters 31 in Richtung orthogonal zur Rückwand 13 eine weitere translatorische Verschiebung desselben in einer Ebene parallel zur Rückwand 13 und dem daran angebrachten Haltesystem 21 möglich. Analog gilt, dass neben einer Rotationsbewegung um eine Achse senkrecht zur Rückwand 13 eine Rotation um eine in einer Ebene parallel zu dieser verlaufenden Achse möglich ist.

An der der sechsten Feststellschraube 65 gegenüberliegenden Grundfläche, des zylinderförmigen Befestigungselements 64, verjüngt sich dieses zu einem stabförmigen Fortsatz 66, an welchem mittels des Zylinders 37der Entnahmegefässhalter 31 lösbar befestigt ist. Das heisst durch Lösen der fünften Feststellschraube 32 kann entweder der Entnahmegefässhalter 37 entfernt werden oder dieser um eine entlang der Zylinderachse des weiteren Befestigungselements 64 verlaufende Achse verdreht werden. Ferner erlaubt die Länge des stabförmigen Fortsatzes 66 auch eine gewisse Veränderung des Abstandes des Entnahmegefässhalters 31 zum L-förmigen Bügel 63. Damit ist die Position des Entnahmegefässhalters durch eine translatorische Verschiebung in beliebiger Richtung im Raum veränderbar. Ferner ist ein Verdrehen des Entnahmegefässhalters 31 um eine beliebig im Raum angeordnete Achse möglich und damit seine Ausrichtung sowie seine Position im Wägeraum 3 veränderbar. Es versteht sich von selbst, dass das Entnahmegefäss 33 je nachdem, ob mit der linken oder der rechten Hand abgefüllt werden soll, mit seiner Öffnung in beide Richtungen auf dem Entnahmegefässhalter 31 platziert werden kann.

Ein in der Figur 14 gezeigter, Zwischenboden 70 ist am Haltesystem 21 mittels einer weiteren Einhängvorrichtung 71 zusätzlich oder alternativ zur Einhängevonichtung 25 für den oder die Entnahmegefässhalter 31 (hier nicht gezeigt) Installietbar. Auf diese Weise ist ein gewisser Schutz des Wägegutträgers 2 vor beispielsweise aus einem Entnahmegefäss 33 fallendem abzufüllendem Wägegut möglich. Der hier gezeigte Zwischenboden 70 kann in seiner Höhe über dem Boden 8 des Wägeraums 3 bzw. der Auffangschale 17 verstellt werden. Er ist in der gezeigten Darstellung aus einem durchsichtigen Material, beispielsweise aus Glas, bestehend ausgebildet und setzt sich aus zwei ebenen Platten zusammen, die L-förmig mit einander verbunden sind. Somit bildet dieser Zwischenboden 70 ausserdem noch eine Art Windschutz für den Wägegutträger 2. Der Zwischenboden 70 ist in einfacher Weise installierbar, indem er in eine Halterung 72 eingeschoben wird und dort zwischen einer oberen und einer unteren federnden Klemmlasche 73, 74 festgeklemmt wird.

Das Abfüllsystem, welches den Wägegutträger und die Entnahmeeinrichtung umfasst, sowie der Wägegutträger und die Entnahmeeinrichtung als solche wurde in bevorzugten Ausgestaltungen dargestellt und beschrieben. Anhand der erfindungsgemässen Lehre sind jedoch jeweils weitere fachmännische Ausgestaltungen realisierbar.

Insbesondere kann eine Verstelleinrichtung nicht nur Befestigungselemente mit Feststellschrauben aufweisen; es sind auch Verstelleinrichtungen mit Rutschkupplungen denkbar. Eine Verstelleinrichtung, die eine oder mehrere Parallefthrungen umfasst, ist ebenso denkbar, wie eine Verstelleinrichtung, die ein oder mehrere Kugelgelenke aufweist. Selbstverständlich sind Verstelleinrichtungen, die eine Kombination der vorgenannten Elemente aufweisen mögliche Ausführungsformen.

### Bezugszeichenliste

- 1: Waage
- 2: Wägegutträger
- 3: Wägeraum
- 4: Waagengehäuse
- 5: Kalibriervorrichtung
- 6: Auflage
- 7: Kalibriergewicht
- 8: Boden
- 9: Windschutz
- 10: Einhängungen
- 11: Koppelelement
- 12: Durchführungen
- 13: Rückwand
- 14: L-förmiger Ausleger
- 15: Wägezelle
- 16: Fortsätze
- 17: Auffangschale
- 18: Haltebolzen
- 19: Verbindungsbereich
- 20, 120: Entnahmeeinrichtung
- 21: Haltesystem
- 22: Stange
- 23: säulenartiger Vorsprung
- 24: Nut
- 25: Einhängevorrichtung
- 26: Stab
- 27: Haltevorrichtung
- 28: Befestigungselement
- 29: U-förmiger Bügel
- 30: vierte Feststellschraube
- 31: Entnahmegefässhalter
- 32: fünfte Feststellschraube
- 33: Entnahmegefäss
- 34: Klemmfeder
- 35: Haltebogen
- 36: Gitterstäbe
- 37: Zylinder
- 38: erste Feststellschraube
- 39: zweite Feststellschraube
- 40: abgeflachter Bereich
- 41: dritte Feststellschraube
- 42: Klemmelement
- 43: obere Befestigungslasche
- 44: untere Befestigungslasche
- 45: Stativ
- 46: Hülse
- 47: Verlängerungsstab
- 48: Durchgangsbohrung
- 49: Gitterstab
- 50: Gitter
- 51: bogenförmige Basis
- 52: Halter
- 53: Dorn
- 55: Aufnahmehülse
- 56: Aufnahmekäfig
- 57: kleine Reaktionsgefäse
- 58: Deckel
- 59: Lasche
- 60: Einfüllöffnung
- 61: Ring
- 62: weiche Hülse
- 63: L- förmiger Bügel
- 64: weiteres zylinderförmiges Befestigungselement
- 65: sechste Feststellschraube
- 66: stabförmiger Fortsatz
- 67: Kunststoffverkleidung
- 68: V-förmige Auflagerinne
- 69: Schraube
- 70: Zwischenboden
- 71: Einhängvorrichtung
- 72: Halterung
- 73: obere federnde Klemmlasche
- 74: untere federnde Klemmlasche
- 75: Kerben

## Patentansprüche

1. Waage mit einem Wägeraum (3), mit einem eine Wägezelle (15) enthaltenden, die Rückwand (13) und den Boden (8) des Wägeraums (3) bildenden Waagengehäuse (4) und mit einem Wägegutträger (2) wobei der Wägegutträger (2) an einem Ausleger der Wägezelle (15) welcher eine durch Durchführungen (12) in der Rückwand (13) des Wägeraums (3) reichende Koppelanordnung aufweist, abnehmbar angebracht ist, und wobei der Wägegutträger (2) einen Wägegutaufnahmeaufsatz sowie eine Versteileinrichtung aufweist, **dadurch gekennzeichnet, dass** der Wägegutaufnahmeaufsatz im Wägeraum (3) bezüglich der Lage der Koppelanordnung vermittels der Verstelleinrichtung des Wägegutträgers (2) translatorisch verschiebbar und in verschobener Lage positionierbar ist.

2. Waage nach Anspruch 1, **dadurch gekennzeichnet, dass** die Ausrichtung und der Ort des Wägegutaufnahmeaufsatzes im Wägeraum (3) bezüglich der Lage der Koppelanordnung vermittels der Verstelleinrichtung des Wägegutträgers (2) durch eine translatorische Verschiebung und eine Rotation einstellbar sind.

3. Waage nach Anspruch 1 oder 2, **dadurch gekennzeichnet, dass** die Höhe des Wägegutaufnahmeaufsatzes über dem Boden des Wägeraums (8) einstellbar ist.

4. Waage nach Anspruch 1, 2 oder 3, **dadurch gekennzeichnet, dass** der Wägegutaufnahmeaufsatz in einer zur Rückwand (13) orthogonalen Richtung translatorisch verschiebbar und in verschobener Lage positionierbar ist.

5. Waage nach einem der Ansprüche 2 bis 4, **dadurch gekennzeichnet, dass** der Wägegutaufnahmeaufsatz um eine vertikale Achse nahe der Rückwand (13) verschwenkbar ist.

6. Waage nach einem der Ansprüche 2 bis 5, **dadurch gekennzeichnet, dass** der Wägegutaufnahmeaufsatz um eine zur Rückwand (13) orthogonale Achse rotierbar ist

7. Waage nach einem der Ansprüche 2 bis 6, **dadurch gekennzeichnet, dass** der Wägegutaufnahmeaufsatz einen Auflagebereich für ein Einwaagegefäss aufweist, wobei die Ausrichtung des Wägegutaufnahmeaufsatzes durch eine Rotation um eine Achse orthogonal zum Auflagebereich einstellbar ist.

8. Waage nach einem der Ansprüche 1 bis 7, **dadurch gekennzeichnet, dass** der Wägegutaufnahmeaufsatz einen Auflagebereich für ein Einwaagegefäss aufweist, wobei der Wägegutaufnahmeaufsatz in Richtung orthogonal zum Auflagebereich translatorisch verschiebbar und in verschobener Lage positionierbar ist.

9. Waage nach einem der Ansprüche 1 bis 7, **dadurch gekennzeichnet, dass** der Wägegutaufnahmeaufsatz einen Auflagebereich für ein Einwaagegefäss aufweist und auf der seinem Auflagebereich abgewandten Seite einen Dorn (53) aufweist, und dass ein Verbindungselement des Wagegutträgers zum Wägegutaufnahmeaufsatz eine Durchgangsbohrung (48) aufweist, wobei der Dorn (53) in die Durchgangsbohrung (48) eingreift, und wobei der Wägegutaufnahmeaufsatz relativ zum Verbindungselement um eine entlang dem Dorn (53) verlaufende Achse rotierbar ist und/oder der Wägegutaufnahmeaufsatz relativ zum Verbindungselement entlang dem Dorn (53) translatorisch verschiebbar ist.

10. Waage nach einem der Ansprüche 1 bis 9, **dadurch gekennzeichnet, dass** der Wägegutträger nahe der Rückwand (13) eine vertikal angeordnete Stange (22) aufweist, die durch ein Verbindungselement zum Wägegutaufnahmeaufsatz hindurch reicht, wobei die Einstellung der Höhe des Wägegutaufnahmeaufsatzes durch eine Verschiebung des Verbindungselements entlang der Stange (22) erfolgt.

11. Waage nach einem der Ansprüche 2 bis 10, **dadurch gekennzeichnet, dass** ein Verbindungselement des Wägegutträgers zum Wägegutaufnahmeaufsatz als ausziehbares Stativ (45) ausgebildet ist, welches Stativ (45) einen Verlängerungsstab (47) und eine Hülse (46) aufweist, wobei der Verlängerungsstab (47) in die Hülse (46) einfahrbar und aus dieser ausfahrbar ist und/oder der Verlängerungsstab (47) um eine entlang der Hülse (46) verlaufende Achse rotierbar ist.

12. Waage nach einem der Ansprüche 1 bis 11, **dadurch gekennzeichnet, dass** der Wägegutaufnahmeaufsatz in Form eines Gitters (50) mit um 90° abgebogenen Gitterstäben (49) für die Ablage eines Einwaagegefässes oder als eine Aufnahmehülse (55) für die Aufnahme eines aus isolierendem Material bestehenden Einwaagegefässes oder als Rinne (68) zur Aufnahme eines länglichen Einwaagegefässes oder in Form eines Aufnahmekäfigs (56) für die Aufnahme mehrerer kleiner enghalsiger Reaktionsgefässe (57) ausgebildet ist.

13. Waage nach Anspruch 12, **dadurch gekennzeichnet, dass** die Gitterstäbe (49) des Wägegutaufnahmeaufsatz in Form eines Gitters (50) zumindest teilweise von einem Polymermaterial zum Schutz gegen ein Verrutschen des Einwaagegefässes umgeben sind.

14. Waage nach einem der Ansprüche 1 bis 13, **dadurch gekennzeichnet, dass** der Wägegutaufnahmeaufsatz abnehmbar am Wägegutträger (2) angebracht ist.

15. Waage nach einem der Ansprüche 1 bis 14, **dadurch gekennzeichnet, dass** der Ausleger der Wägezelle, an dem der Wägegutträger angebracht ist, mit einer Auflage für mindestens ein Kalibriergewicht (7) einer Kalibriervorrichtung (5) versehenen ist.

16. Waage nach einem der Ansprüche 1 bis 15, **dadurch gekennzeichnet, dass** an der Rückwand (13) des Wägeraums (3) ein festes Haltesystem (21) für das Befestigen einer Entnahmeeinrichtung (20) auf verschiedenen Höhen über dem Boden (8) angeordnet ist, welche einen Entnahmegefässhalter (31) aufweist, wobei der Entnahmegefässhalter (31) im Wägeraum (3) bezüglich der Lage des Haltesystems vermittels Verstelleinrichtungen der Entnahmeeinrichtung (20) translatorisch verschiebbar und in verschobener Lage positionierbar ist.

17. Waage nach Anspruch 16, **dadurch gekennzeichnet, dass** die Ausrichtung und der Ort des Entnahmegefässhalters (31) im Wägeraum (3) bezüglich der Lage des Haltesystems (21) vermittels Verstelleinrichtungen der Entnahmeeinrichtung (20) durch eine translatorische Verschiebung und eine Rotation einstellbar sind.

18. Waage nach Anspruch 16 oder 17, **dadurch gekennzeichnet, dass** die Entnahmeeinrichtung (20) mittels einer Einhängvorrichtung (25) abnehmbar am Haltesystem (21) angebracht ist.

19. Waage nach einem der Ansprüche 16 bis 18, **dadurch gekennzeichnet, dass** die Entnahmeeinrichtung (120) für die Aufnahme von mindestens zwei Entnahmegefässhaltern (31) ausgebildet ist.

20. Waage nach einem der Ansprüche 16 bis 19, **dadurch gekennzeichnet, dass** die Entnahmeeinrichtung einen U-förmigen (29) oder einen L-förmigen Bügel (63) aufweist, an welchem der Entnahmegefässhalter (31) abnehmbar befestigt ist.

21. Waage nach einem der Ansprüche 16 bis 20, **dadurch gekennzeichnet, dass** der Entnahmegefässhalter einen Haltebogen (35) aufweist, wobei im gekrümmten Bereich des Haltebogens (35) parallel zueinander angeordnete Gitterstäbe (36) am Haltebogen (35) angebracht sind.

22. Waage nach Anspruch 21, **dadurch gekennzeichnet, dass** die Gitterstäbe (36) zumindest teilweise von einem Polymermaterial zum Schutz gegen ein Verrutschen eines Entnahmegefässes (33) umgeben sind.

23. Waage nach einem der Ansprüche 18 bis 22, **dadurch gekennzeichnet, dass** ein Zwischenboden (70) am Haltesystem (21) mittels einer weiteren Einhängvorrichtung (71) zusätzlich oder alternativ zur Einhängvorrichtung (25) der Entnahmeeinrichtung (20) anbringbar ist.

24. Waage nach Anspruch 23, **dadurch gekennzeichnet, dass** sich der Zwischenboden (70) aus zwei ebenen Platten aus einem durchsichtigen Material zusammensetzt, die L-förmig mit einander verbunden sind.

25. Waage nach einem der Ansprüche 16 bis 24, **dadurch gekennzeichnet, dass** der Wägegutträger (2) mit dem Wägegutaufnahmeaufsatz und das Haltesystem (21) mit der Entnahmeeinrichtung (20) ein Abfüllsystem bilden.

## Claims

1. Balance with a weighing compartment (3) and a balance housing (4) that contains a weighing cell (15) and forms the rear wall (13) and the floor (8) of the weighing compartment (3) and with a weighing object carrier (2), wherein the weighing object carrier (2) is removably attached to a cantilevered extension of the weighing cell (15), said extension having a coupling arrangement reaching through passage openings (12) in the rear wall (13) of the weighing compartment (3), and wherein the weighing object carrier (2) has a weighing object receiver setup as well as a position-adjusting device, **characterized in that** the weighing object receiver setup is capable of translatory displacement within the weighing compartment (3) in relation to the location of the coupling arrangement by means of the position-adjusting device of the weighing object carrier (2), and further capable of being held in the displaced position.

2. Balance according to claim 1, **characterized in that** the orientation and location of the weighing object receiver setup in the weighing compartment (3) in relation to the coupling arrangement are adjustable by means of the position-adjusting device of the weighing object carrier (2) through a translatory displacement and a rotation.

3. Balance according to claim 1 or 2, **characterized in that** the height of the weighing object receiver setup above the floor of the weighing compartment (8) is adjustable.

4. Balance according to claim 1, 2 or 3, **characterized in that** the weighing object receiver setup is capable of translatory displacement in a direction orthogonal to the rear wall (13) and further capable of being held in the displaced position.

5. Balance according to one of the claims 2 to 4, **characterized in that** the weighing object receiver setup can be swiveled about a vertical axis near the rear wall (13) .

6. Balance according to one of the claims 2 to 5, **characterized in that** the weighing object receiver setup can be rotated about an axis that is orthogonal to the rear wall (13).

7. Balance according to one of the claims 2 to 6, **characterized in that** the weighing object receiver setup has a seating area for a weighing receptacle, wherein the orientation of the weighing object receiver setup is adjustable through a rotation about an axis that is orthogonal to the seating area.

8. Balance according to one of the claims 1 to 7, **characterized in that** the weighing object receiver setup has a seating area for a weighing receptacle, wherein the weighing object receiver setup is capable of translatory displacement in the direction orthogonal to the seating area, and further capable of being held in the displaced position.

9. Balance according to one of the claims 1 to 7, **characterized in that** the weighing object receiver setup has a seating area for a weighing receptacle and further has a peg (53) on the side of the weighing object receiver setup that faces away from the seating area, further **characterized in that** a connecting element that connects the weighing object carrier to the weighing object receiver setup has a passage bore hole (48), wherein the peg (53) engages the bore hole (48), and wherein the weighing object receiver setup is rotatable relative to the connecting element about an axis running along the peg (53), and/or the weighing object receiver setup is capable of translatory displacement along the peg (53) relative to the connecting element.

10. Balance according to one of the claims 1 to 9, **characterized in that** the weighing object carrier (2) has a vertically oriented rod (22) arranged near the rear wall (13), said rod (22) passing through a connector element that connects to the weighing object receiver setup, wherein the height adjustment of the weighing object receiver setup is effected by sliding the connecting element along the rod (22).

11. Balance according to one of the claims 2 to 10, **characterized in that** a connector element connecting the weighing object carrier to the weighing object receiver setup is configured as a pullout extension holder device (45), wherein said pullout extension holder device (45) has an extension rod (47) and a sleeve (46), wherein further said extension rod (47) can slide into or out of the sleeve (46) and/or the extension rod is rotatable about an axis that extends in the lengthwise direction of the sleeve.

12. Balance according to one of the claims 1 to 11, **characterized in that** the weighing object receiver setup is configured in the shape of a grate (50) with grate bars (49) angled off at 90° as a receiving seat for a weighing receptacle, or in the shape of a receiving sleeve (55) as a receiving seat for a weighing receptacle consisting of an electrically isolating material, or in the shape of a channel (68) as a receiving seat for an elongated weighing receptacle, or in the shape of a receiving cage (56) as a receiving seat of a plurality of small narrow-necked reaction vessels (57).

13. Balance according to claim 12, **characterized in that** the grate bars (49) of the weighing object receiver setup in the shape of a grate (50) are encased at least partially by a polymer material to protect the weighing receptacle from slipping out of place.

14. Balance according to one of the claims 1 to 13, **characterized in that** the weighing object receiver setup is arranged on the weighing object carrier (2) so as to be removable from the latter.

15. Balance according to one of the claims 1 to 14, **characterized in that** the cantilevered extension of the weighing cell to which the weighing object carrier is attached is provided with a receiving seat for at least one calibration weight (7) of a calibration device.

16. Balance according to one of the claims 1 to 15, **characterized in that** a fixed holder system (21) is arranged at the rear wall (13) of the weighing compartment (3) to fasten a source container device (20) comprising a source container holder (31) at different heights above the floor (8), wherein the source container holder (31) is capable of translatory displacement within the weighing compartment (3) in relation to the location of the holder system by means of a position-adjusting device of the source container device (20) and further capable of being held in the displaced position.

17. Balance according to claim 16, **characterized in that** the orientation and the location of the source container holder (31) within the weighing compartment (3) are adjustable relative to the location of the holder system (21) by means of a position-adjusting device of the source container device (20) through a translatory displacement and a rotation.

18. Balance according to claim 16 or 17, **characterized in that** the source container device (20) is removably attached to the holder system (21) by means of a suspension device (25) .

19. Balance according to claim 16, 17 or 18, **characterized in that** the receptacle-filling system has a source container device (120) configured to be capable of receiving at least two source container holder (31).

20. Balance according to one of the claims 16 to 19, **characterized in that** the source container device has a U-shaped bracket (29) or an L-shaped bracket (63), to which U- or L-shaped bracket the source container holder (31) is removably attached.

21. Balance according to one of the claims 16 to 20, **characterized in that** the source container holder has a holder arm (35), wherein in the curved portion of the holder arm (35) grate bars (36) arranged parallel to each other are attached to the holder arm (35).

22. Balance according to claim 21, **characterized in that** the grate bars (36) are encased at least in part with a polymer material as a protective measure to keep a source container (33) from slipping out of place.

23. Balance according to one of the claims 18 to 22, **characterized in that** an intermediate floor (70) can be attached to the holder system (21) by means of a further suspension device (71), said suspension device (71) being provided in addition to or as an alternative for the suspension device (25) of the source container device (20) .

24. Balance according to claim 23, **characterized in that** the intermediate floor (70) is composed of two flat plates of a transparent material, which are connected to each other so that they form an L-shape.

25. Balance according to one of the claims 16 to 24, **characterized in that** the weighing object carrier (2) with the weighing object receiver setup and the holder system (21) with the source container device (20) form a receptacle-filling system.

## Revendications

1. Balance comprenant un espace de pesée (3), un carter de balance (4) contenant une cellule de pesée (15) et formant la paroi arrière (13) et le fond (8) de l'espace de pesée (3) et un support d'objet à peser (2), le support d'objet à peser (2) étant placé de façon amovible sur un cantilever de la cellule de pesée (15), laquelle présente un dispositif d'accouplement allant par des passages (12) dans la paroi arrière (13) de l'espace de pesée (3), et le support d'objet à peser (2) présentant un recouvrement de logement d'objet à peser et un dispositif d'ajustage, **caractérisée en ce que** le recouvrement de logement d'objet à peser peut être déplacé par translation dans l'espace de pesée (3) par rapport à l'emplacement du dispositif d'accouplement au moyen du dispositif d'ajustage du support d'objet à peser (2) et peut être positionné dans une position déplacée.

2. Balance selon la revendication 1, **caractérisée en ce que** l'orientation et l'emplacement du recouvrement de logement d'objet à peser peut être réglé dans l'espace de pesée (3) par rapport à la position du dispositif d'accouplement au moyen du dispositif d'ajustage du support d'objet à peser (2) par un déplacement de translation et une rotation.

3. Balance selon la revendication 1 ou 2, **caractérisée en ce que** la hauteur du recouvrement de logement d'objet à peser peut être réglée au dessus du fond de l'espace de pesée (8).

4. Balance selon la revendication 1, 2 ou 3, **caractérisée en ce que** le recouvrement de logement d'objet à peser peut être déplacé par translation dans une direction perpendiculaire à la paroi arrière (13) et peut être positionné dans la position déplacée.

5. Balance selon l'une quelconque des revendications 2 à 4, **caractérisée en ce que** le recouvrement de logement d'objet à peser peut pivoter autour d'un axe vertical à proximité de la paroi arrière (13).

6. Balance selon l'une quelconque des revendications 2 à 5, **caractérisée en ce que** le recouvrement de logement de l'objet à peser peut tourner autour d'un axe perpendiculaire à la paroi arrière (13).

7. Balance selon l'une quelconque des revendications 2 à 6, **caractérisée en ce que** le recouvrement de logement d'objet à peser présente une zone de support pour un récipient de pesée, l'orientation du recouvrement de logement d'objet à peser étant réglable par une rotation autour d'un axe perpendiculairement à la zone de support.

8. Balance selon l'une quelconque des revendications 1 à 7, **caractérisée en ce que** le recouvrement de l'objet à peser présente une zone de support pour un récipient de pesée, le recouvrement de logement d'objet à peser pouvant coulisser par translation dans la direction perpendiculaire à la zone de support et pouvant être positionné dans la position déplacée.

9. Balance selon l'une quelconque des revendications 1 à 7, **caractérisée en ce que** le recouvrement de logement d'objet à peser présente une zone de support pour un récipient de pesée et présente un mandrin (53) sur le côté opposé à sa zone de support et **en ce qu'**un élément de liaison du support d'objet à peser pour le recouvrement de logement d'objet à peser présente un alésage de passage (48), le mandrin (53) s'engageant dans l'alésage de passage (48), et le recouvrement de logement d'objet à peser pouvant tourner par rapport à l'élément de liaison autour d'un axe agencé le long du mandrin (53) et/ou le recouvrement de logement d'objet à peser pouvant être déplacé par translation par rapport à l'élément de liaison le long du mandrin (53).

10. Balance selon l'une quelconque des revendications 1 à 9, **caractérisée en ce que** le support d'objet à peser présente à proximité de la paroi arrière (13) une barre (22) disposée verticalement, qui passe à travers un élément de liaison vers le recouvrement de logement d'objet à peser, le réglage de la hauteur du recouvrement de logement d'objet à peser s'effectuant par un déplacement de l'élément de liaison le long de la barre (22).

11. Balance selon l'une quelconque des revendications 2 à 10, **caractérisée en ce qu'**un élément de liaison du support d'objet à peser pour le recouvrement de logement d'objet à peser est conçu comme un pied (45) extractible, lequel pied (45) présente une barre de prolongement (47) et une douille (46), la barre de prolongement (47) pouvant être entrée dans la douille (46) et pouvant être sortie de celle-ci et/ou la barre de prolongement (47) pouvant tourner autour d'un axe agencé le long de la douille (46).

12. Balance selon l'une quelconque des revendications 1 à 11, **caractérisée en ce que** le recouvrement de logement d'objet à peser est conçu sous la forme d'une grille (50) avec des barres de grille (49) pliées de 90° pour le dépôt d'un récipient de pesée ou sous la forme d'une douille de logement (55) pour le logement d'un récipient de pesée à base de matière isolante ou sous forme de goulotte (68) pour le logement d'un récipient de pesée allongé ou sous la forme d'une cage de logement (56) pour le logement de plusieurs petits récipients de réaction (57) à goulot étroit.

13. Balance selon la revendication 12, **caractérisé en ce que** les barres de grille (49) du recouvrement de logement de l'objet à peser se présentant sous la forme d'une grille (50) sont entourées au moins en partie par un matériau polymère pour la protection contre un glissement du récipient de pesée.

14. Balance selon l'une quelconque des revendications 1 à 13, **caractérisée en ce que** le recouvrement de logement d'objet à peser est placé de façon amovible sur le support d'objet à peser (2).

15. Balance selon l'une quelconque des revendications 1 à 14, **caractérisée en ce que** le cantilever de la cellule de pesée, sur laquelle le support d'objet à peser est placé, est dotée d' un support pour au moins un poids de calibrage (7) d'un dispositif de calibrage (5).

16. Balance selon l'une quelconque des revendications 1 à 15, **caractérisée en ce que** sur la paroi arrière (13) de l'espace de pesée (3) est disposé un système de retenue (21) pour la fixation d'un dispositif de prélèvement (20) à différentes hauteurs au-dessus du sol (8), qui présente un support de récipient de prélèvement (31), le support de récipient de prélèvement (31) pouvant être déplacé par translation dans l'espace de pesée (3) par rapport à la position du système de retenue au moyen de dispositifs d'ajustage du dispositif de prélèvement (20) et pouvant être positionné dans une position déplacée.

17. Balance selon la revendication 16, **caractérisée en ce que** l'orientation et l'emplacement du support de récipient de prélèvement (31) dans l'espace de pesée (3) est réglable par rapport à la position du système de retenue (21) au moyen de dispositifs d'ajustage du dispositif de prélèvement (20) par un déplacement de translation et une rotation.

18. Balance selon la revendication 16 ou 17, **caractérisée en ce que** le dispositif de prélèvement (20) est placé de façon amovible sur le système de retenue (21) au moyen d'un dispositif d'accrochage (25).

19. Balance selon l'une quelconque des revendications 16 à 18, **caractérisée en ce que** le dispositif de prélèvement (120) est conçu pour le logement d'au moins deux supports de récipient de prélèvement (31) .

20. Balance selon l'une quelconque des revendications 16 à 19, **caractérisée en ce que** le dispositif de prélèvement présente un étrier (63) en forme en U (29) ou en L (63), sur lequel le support de récipient de prélèvement (31) est fixé de façon amovible.

21. Balance selon l'une quelconque des revendications 16 à 20, **caractérisée en ce que** le support de récipient de prélèvement présente un coude de retenue (35), des barres de grille (36) disposées parallèlement entre elles étant placées sur le coude de retenue (35) dans la zone incurvée du coude de retenue (35).

22. Balance selon la revendication 21, **caractérisée en ce que** les barres de grille (36) sont entourées au moyen en partie par un matériau polymère pour la protection contre un glissement d'un récipient de prélèvement (33).

23. Balance selon l'une quelconque des revendications 18 à 22, **caractérisée en ce qu'**un fond intermédiaire (70) peut être placé sur le système de retenue (21) au moyen d'un autre dispositif d'accrochage (71) en supplément ou en remplacement du dispositif d'accrochage (25) du dispositif de prélèvement (20).

24. Balance selon la revendication 23, **caractérisée en ce que** le fond intermédiaire (70) se compose de deux plaques planes à base d'un matériau transparent, qui sont reliées l'une à l'autre en forme de L.

25. Balance selon l'une quelconque des revendications 16 à 24, **caractérisée en ce que** le support d'objet à peser (2) avec le recouvrement de logement d'objet à peser et le système de retenue (21) avec le dispositif de prélèvement (20) forment un système de remplissage.
